# EUROPÄISCHE PATENTSCHRIFT

(11) **EP 4 042 056 B1**
(45) Veröffentlichungstag und Bekanntmachung des Hinweises auf die Patenterteilung: **15.01.2025**
(21) Anmeldenummer: 20789042.7
(22) Anmeldetag: 05.10.2020
(51) Int. Cl.: F16L 53/32, F16L 53/38, F16L 59/14

(54) **BEHEIZBARE FLUIDLEITUNG MIT INTERNER UND EXTERNER HEIZEINRICHTUNG**
HEATABLE FLUID LINE HAVING AN INTERNAL AND EXTERNAL HEATING DEVICE
CONDUITE DE FLUIDE POUVANT ÊTRE CHAUFFÉE POURVUE D'UN DISPOSITIF DE CHAUFFAGE INTERNE ET EXTERNE

(30) Priorität: 10.10.2019 DE 102019127273
(43) Veröffentlichungstag der Anmeldung: 17.08.2022
(73) Patentinhaber: NORMA Germany GmbH, 63477 Maintal (DE)
(72) Erfinder: MANN, Stephan, 63477 Maintal (DE); BIRMAN, Ervin, 24000 Subotica (RS)
(74) Vertreter: Patentanwälte Olbricht Buchhold Keulertz
(86) Internationale Anmeldenummer: PCT/EP2020/077881
(87) Internationale Veröffentlichungsnummer: WO 2021/069389

(56) Entgegenhaltungen:
- EP-A1- 2 557 894
- EP-A1- 3 279 541
- DE-A1- 3 149 623

## Beschreibung

Die Erfindung betrifft eine beheizbare Fluidleitung gemäß dem Oberbegriff von Anspruch 1.

Um gefrorenes Wasser zu verflüssigen wird in einer Fluidleitung je nach verwendetem Erhitzungsverfahren eine Energieinvestition von etwa 30 W/m bis 100 W/m veranschlagt. Dies liegt im Wesentlichen an der hohen Schmelzenthalpie des Wassers und an einer angestrebten kurzen Auftauzeit.

Derzeit bekannte beheizbare Fluidleitungen umfassen ein Rohr und eine in dem Rohr angeordnete Heizeinrichtung. Die Heizeinrichtung ist von einem im Rohr geführten Fluid umgeben, so dass das Fluid mittels der Heizeinrichtung von innen her erhitzt werden kann. Nachteilig ist jedoch, dass derartige Systeme zur inneren Erwärmung einen erheblichen Energiebedarf haben, um ein Fluid und insbesondere gefrorenes Wasser in kurzer Zeit zu verflüssigen, da die Außenbereiche des Fluides von der inneren Heizeinrichtung lediglich zeitversetzt zum Innenbereich beeinflusst werden. Zudem weisen innere Heizeinrichtungen zumeist mindestens zwei Heizdrähte auf, um eine nennenswerte Heizwirkung zu erzielen.

Es sind auch Fluidleitungen bekannt, welche ein Rohr und eine außerhalb des Rohrs angeordnete Heizeinrichtung umfassen. Die Heizeinrichtung umgibt das im Rohr geführte Fluid, so dass das Fluid mittels der Heizeinrichtung von außen her erhitzt werden kann. Nachteilig ist jedoch, dass Systeme zur äußeren Erwärmung ebenfalls einen erheblichen Energiebedarf haben, um ein Fluid und insbesondere gefrorenes Wasser in kurzer Zeit zu verflüssigen, da der Innenbereich des Fluides von der äußeren Heizeinrichtung lediglich zeitversetzt zum Außenbereich beeinflusst wird. Zudem weisen äußere Heizeinrichtungen zumeist mindestens zwei Heizdrähte auf, um eine nennenswerte Heizwirkung zu erzielen.

Beiden Heizsystemen (inneres und äußeres) ist in nachteiliger Weise gemein, dass ein schnelleres Erhitzen nur mit einer entsprechend höheren Temperatur der Heizeinrichtung erfolgen kann. Dies geht zwangsläufig einher mit einer Steigerung des Energieeintrags. Die Temperatur kann jedoch nicht beliebig erhöht werden, um eine immer schnellere Verflüssigung zu realisieren, da sonst beispielsweise das Rohr oder ein inneres Heizelement beschädigt werden kann. Zudem sehen bisher bekannte System die Verwendung von mehreren Heizdrähten je Heizeinrichtung vor, was jedoch zu erhöhten Kosten führt.

Die DE 31 49 623 und die EP 3 279 541 zeigen verschiedene Ausführungsbeispiele von Heizsystemen für Fluidleitungen.

Der Erfindung liegt daher die Aufgabe zugrunde, eine beheizbare Fluidleitung zu schaffen, welche bei geringem Energiebedarf, geringem Zeiteinsatz und niedrigen Kosten Fluid aus seinem gefrorenen Aggregatszustand in seinen flüssigen Zustand überführen kann.

Hauptmerkmale der Erfindung sind im kennzeichnenden Teil von Anspruch 1 angegeben. Ausgestaltungen sind Gegenstand der Ansprüche 2 bis 11.

Erfindungsgemäß wird eine beheizbare Fluidleitung mit einem Rohr vorgeschlagen, das einen Innenraum aufweist, wobei die Fluidleitung eine Längsachse definiert, umfassend eine in dem Innenraum angeordnete innere Heizeinrichtung, wobei eine das Rohr zumindest abschnittsweise umgebende äußere Heizeinrichtung vorgesehen ist.

Der Erfindung liegt nämlich die überraschende Erkenntnis zugrunde, dass, entgegen der Erwartung, eine Kombination beider nachteiliger Heizsysteme (inneres und äußeres) nicht zu noch größeren Nachteilen, sondern vielmehr zur Lösung der Nachteile des jeweils anderen Systems führt. Dadurch, dass nämlich das Fluid zeitgleich sowohl von innen als auch von außen beheizt werden kann, können schnellere Verflüssigungen erzielt werden. Das Fluid wird nämlich zeitgleich von mehreren Seiten erhitzt. Durch die mehrseitige Erhitzung müssen die beiden Heizeinrichtung nämlich nicht mehr so hoch erhitzt werden, um eine, bezogen auf eine ausschließlich innere oder ausschließlich äußere Erhitzung, gleichlang andauernde Verflüssigung zu erzielen. Dies führt zu reduzierten Auftauzeiten.

Mit der Erfindung kann daher ein Fluid, vorzugsweise Wasser, jedoch auch jedes andere Fluid, erhitzt und/oder aus seinem festen in seinen flüssigen Aggregatzustand überführt werden und zwar mit minimierter Oberflächentemperatur und geringerem Zeiteinsatz jeweils verglichen mit bekannten Systemen.

Gemäß einer bevorzugten Ausführungsform der Fluidleitung nach der Erfindung ist das Rohr ausgebildet, um einen bezogen auf die Längsachse der Fluidleitung radialen Wärmetransport in Richtung des Innenraums zu ermöglichen. Zwar kann allgemein vielen Materialien eine gewisse Wärmeleitungsfunktion zugesprochen werden, zumeist ist diese jedoch beiläufig vorhanden und von untergeordneter Wirkung. Dem Rohr ist hingegen bewusst eine derartige Wärmeleitungsfunktion zugewiesen und wird von ihm nicht beiläufig oder zufällig erfüllt. Der Vorteil der Wärmeleitungsfunktion liegt darin, dass die von der externen Heizeinrichtung ausgehende Hitze zu einem größtmöglichen Anteil auf das Fluid einwirken kann. Das Rohr leitet somit die Hitze der äußeren Heizeinrichtung ohne eine bewusste Isolationsfunktion an das Fluid weiter.

Das Rohr kann aus Kunststoff, vorzugsweise thermoplastischem Kunststoff, wie Polyamid, ausgebildet sein. Es kann aber auch aus Gummi oder Metall bestehen oder aber auch ein Mehrschichtrohr sein. Insbesondere soll eine Wärmeisolierung von dem Rohr vermieden werden. Dies kann beispielsweise mittels Materialauswahl oder Materialdicke erfolgen.

Es ist gemäß einer weiteren bevorzugten Ausführungsform der erfindungsgemäßen der Fluidleitung denkbar, dass die innere Heizeinrichtung einen inneren Heizpfad, vorzugsweise ausschließlich einen einzigen inneren Heizpfad aufweist, welcher sich entlang der Längsachse erstreckt. Es ist auch denkbar, dass sich der innere Heizpfad ausschließlich entlang der Längsachse erstreckt. Diese Ausführung reduziert die Kosten für den einzusetzenden Heizpfad erheblich, da hier aufgrund der mehrseitigen Erhitzung bereits ein einziger Heizpfad genügt, um eine zufriedenstellende Erhitzung zu erzielen. Grundsätzlich kann der Heizpfad bei allen Ausführungen der Erfindung als bestrombarer Heizdraht und/oder als fluiddurchströmbarer Heizkanal ausgebildet sein.

Denkbar ist bei einer weiteren Ausgestaltung der beheizbaren Fluidleitung nach der Erfindung, dass die äußere Heizeinrichtung einen äußeren Heizpfad, vorzugsweise ausschließlich einen einzigen äußeren Heizpfad aufweist, welcher sich entlang der Längsachse erstreckt. Es ist auch denkbar, dass sich der äußere Heizpfad ausschließlich entlang der Längsachse erstreckt. Diese Ausführung reduziert die Kosten für den einzusetzenden Heizpfad erheblich, da hier aufgrund der mehrseitigen Erhitzung bereits ein einziger Heizpfad genügt, um eine zufriedenstellende Erhitzung zu erzielen. Zudem kann dadurch auf äußere die Anordnung des äußeren Heizpfades beeinflussende Konstruktionsanforderungen eingegangen werden, beispielsweise falls eine im montierten Zustand der Fluidleitung nicht zur Fluidleitung gehörende Wärmequelle ohnehin vorhanden ist und das Fluid erwärmt. In diesem Fall könnte das Fluid lediglich auf der der Wärmequelle gegenüberliegenden Seite bezüglich der Längsachse erwärmt werden.

Gemäß einer weiteren Ausführungsform ist der innere Heizpfad die Längsachse wendelförmig entlang einer inneren Schraublinie umwickelnd angeordnet und/oder ist der äußere Heizpfad das Rohr wendelförmig entlang einer äußeren Schraublinie umwickelnd angeordnet. Durch die Wendelform eines oder beider Heizdrähte wird die Heizleistung pro Flächeneinheit des Rohres gegenüber einer geradlinigen Anordnung bzw. einer Erstreckung ausschließlich entlang der Längsachse des/der Heizleiter erhöht.

Es ist auch denkbar, dass die Wendelrichtung des inneren Heizpfads identisch mit der Wendelrichtung des äußeren Heizpfads ist und die Schraublinien beider Heizdrähte zueinander um eine halbe Steigung versetzt verlaufen. Die Steigung bezieht sich hier auf den äußeren Heizpfad. Dies kann zu einer bestmöglichen Verteilung der Wärmequellen in axialer Richtung führen, um eine schnellstmögliche Erwärmung zu erzielen. Als Schraublinie soll eine Kurve aufgefasst werden, die sich mit zumindest abschnittsweise konstanter Steigung um die Längsachse windet.

Weiterbildungsgemäß entspricht der Durchmesser der inneren Schraublinie einem Drittel des Durchmessers der äußeren Schraublinie. Dies kann zu einer bestmöglichen Verteilung der Wärmequellen in radialer Richtung führen, um eine schnellstmögliche Erwärmung zu erzielen. Gerade in Kombination mit einer Schraublinienversetzung um halbe Steigung können die Heizdrähte bestmöglich verteilt werden, um eine wunschgemäß schnelle und energiearme Erhitzung zu realisieren.

Es ist denkbar, dass der äußere Heizpfad unmittelbar an einer Umfangsfläche des Rohres anliegt. Dadurch kann der äußere Heizpfad oder die unmittelbar aufliegende äußere Heizeinrichtung die erzeugte Wärme unmittelbar und nahezu verlustfrei an das Rohr abgeben. Diese Anordnung reduziert den Energieeinsatz und steigert die Effektivität der äußeren Heizeinrichtung.

Erfindungsgemäß ist in der Umfangsfläche des Rohres mindestens eine Hitzeeinleitungsausnehmung für die äußere Heizeinrichtung ausgebildet. Diese Ausnehmung dient der Einleitung von mittels der äußere Heizeinrichtung erzeugten Hitze in das Rohr. Dies führt zur Vergrößerung der Hitzeeinstrahlfläche je Längeneinheit in Längsrichtung und zu einer gleichmäßigen und schnellen Erwärmung des Rohrs. Die Hitzeeinleitungsausnehmung kann bezogen auf eine benachbarte und nicht ausgenommene Umfangsfläche des Rohres 1/4, vorzugsweise 1/3, weiter bevorzugt 1/2 des Durchmessers des äußeren Heizpfades aufnehmen.

Darüber hinaus sind die Heizeinrichtungen unabhängig voneinander steuerbar ausgebildet. Zur Steuerung kann eine externe Steuereinheit vorgesehen sein. Hierdurch können die Heizeinrichtungen beispielsweise zeitlich unabhängig voneinander betrieben werden und/oder aber auch verschiedene Temperaturen erzeugen.

Gemäß einer Weiterbildung der erfindungsgemäßen beheizbaren Fluidleitung weist diese ein thermisch isolierendes Außenrohr auf, welches einen Innenraum aufweist, in welchem das Rohr aufgenommen ist. Hierdurch kann die erzeugte Wärme, welche nicht unmittelbar im Innenraum des fluidführenden Rohres wirkt, zumindest von einem Entweichen in die Umgebung gehindert werden. Beispielsweise gelangt die von der äußeren Heizeinrichtung in entgegengesetzter Richtung zum Rohr abgestrahlte Wärme in den Innenraum des Außenrohrs. Dort hat sie jedoch auf das Rohr einen zusätzlich wärmenden Effekt.

Bei einer weitergebildeten beheizbare Fluidleitung ist der mindestens eine äußere Heizpfad zumindest abschnittsweise, vorzugsweise vollständig, in der Wandung des Rohres angeordnet. Dadurch wird die Hitzeeinstrahlfläche weiter erhöht, was zu einer gleichmäßigen und schnellen Erwärmung des Rohrs führt. Der Heizpfad kann beispielsweise eingespritzt oder eingegossen sein.

Die äußere Heizeinrichtung kann umfangsseitig mit einem thermisch isolierenden Isolationsmittel versehen sein, vorzugsweise einem Thermoklebeband. Hierdurch wird mittels einer ungewollten Wärmestrahlung in entgegengesetzter Richtung zum Rohr abgestrahlte Wärme bestmöglich in der Nähe des Rohres gehalten, um dieses zu erwärmen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
Fig. 1 einen Längsschnitt durch eine Fluidleitung gemäß einer ersten Ausführung und
Fig. 2 einen Längsschnitt durch eine Fluidleitung gemäß einer zweiten Ausführung.

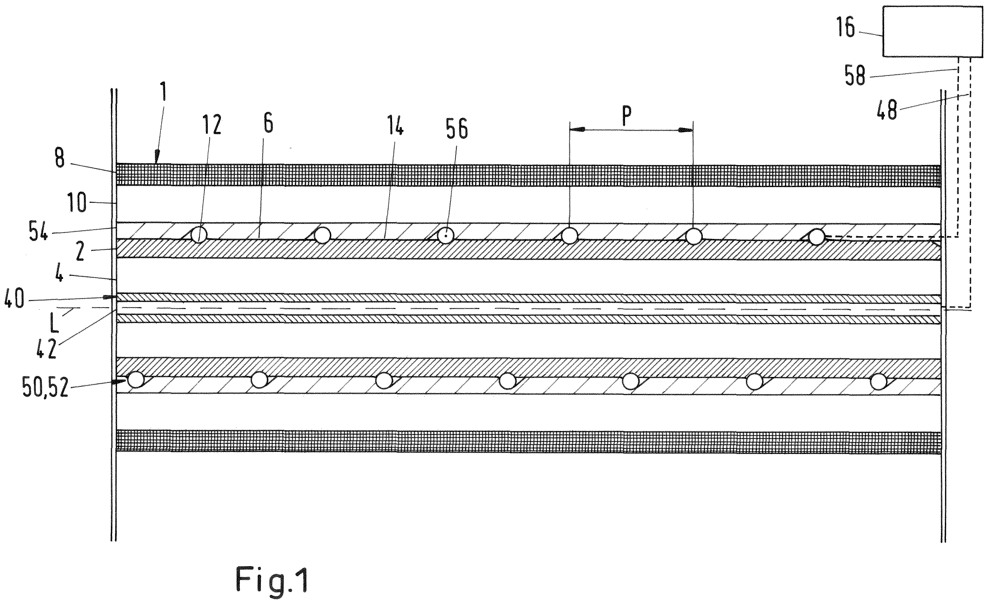

Das erste Ausführungsbeispiel der erfindungsgemäßen Fluidleitung 1 zeigt in der schematischen Fig. 1 einen Abschnitt eines eine Längsachse L definierenden und thermisch leitenden Rohres 2, das einen Innenraum 4 aufweist. In dem fluidführenden Innenraum 4 ist koaxial zur Längsachse L ausgerichtet eine innere Heizeinrichtung 40 mit einem einzigen Heizpfad 42 als Heizdraht angeordnet. Das Rohr 2 ist an seiner Umfangsfläche 6 von einer äußeren Heizeinrichtung 50 mit einem einzigen Heizpfad 52 als Heizdraht umgeben. Zudem weist die Fluidleitung 1 ein thermisch isolierendes Außenrohr 8 auf, welches einen Innenraum 10 aufweist, in welchem das Rohr 2 aufgenommen ist.

Das Rohr 1 besteht aus Kunststoff, vorzugsweise thermoplastischem Kunststoff, wie Polyamid, kann aber auch aus Gummi oder Metall bestehen. Es kann aber auch ein Mehrschichtrohr sein. In der Umfangsfläche 6 des Rohres 2 ist eine Hitzeeinleitungsausnehmung 12 für die äußere Heizeinrichtung 50 ausgebildet sind. Die Hitzeeinleitungsausnehmung 12 gleicht im Schnitt einer konkaven durchgehenden Nut und verläuft auf dem Umfang des Rohres 2 entsprechend dem Verlauf der äußeren Heizeinrichtung 50 ebenfalls wendelförmig. Die Hitzeeinleitungsausnehmung 12 nimmt im gezeigten Beispiel etwa 1/3 des Durchmessers des äußeren Heizpfades 52 auf. Denkbar ist jedoch auch, dass der äußere Heizpfad 52 vollständig in einer Wandung 14 des Rohres 2 angeordnet oder aufgenommen ist. In der Hitzeeinleitungsausnehmung 12 liegt der äußere Heizpfad 52 durchgehend unmittelbar an der Umfangsfläche 6 des Rohres 2 an. Die äußere Heizeinrichtung 50 ist umfangsseitig mit einem thermisch isolierenden Isolationsmittel versehen, welches als Thermoklebeband 54 ausgeführt ist. Das Thermoklebeband 54 verhindert ein Entweichen von Wärme aus einem unmittelbaren Umfeld des Rohres 2.

Der einzige innere Heizpfad 42 der inneren Heizeinrichtung 40 erstreckt sich geradlinig in Längsrichtung L der Fluidleitung 1. Der einzige äußere Heizpfad 52 der äußeren Heizeinrichtung 50 erstreckt sich ebenfalls in Längsrichtung L der Fluidleitung 1, jedoch wendelförmig mit gleichmäßiger Steigung P entlang einer äußeren Schraublinie 56.

Figur 1 zeigt zudem eine nicht näher beschriebene Steuerung 16 zur gemeinsamen oder separaten Steuerung der beiden Heizeinrichtungen 40, 50. Zur Datenübertragung verläuft zwischen der inneren Heizeinrichtung 40 und der Steuerung 16 eine Datenleitung 48. Zwischen der äußeren Heizeinrichtung 50 und der Steuerung 16 verläuft eine Datenleitung 58. Diese Datenleitungen 48, 58 können kabellos oder aber auch kabelgebunden ausgeführt sein.

Das zu erwärmende Fluid umströmt im Innenraum 4 des Rohres 2 die innere Heizeinrichtung 40 und durchströmt die äußere Heizeinrichtung 50. Das Fluid ist daher zeitgleich von der Innenseite her und von der Außenseite her erhitzbar.

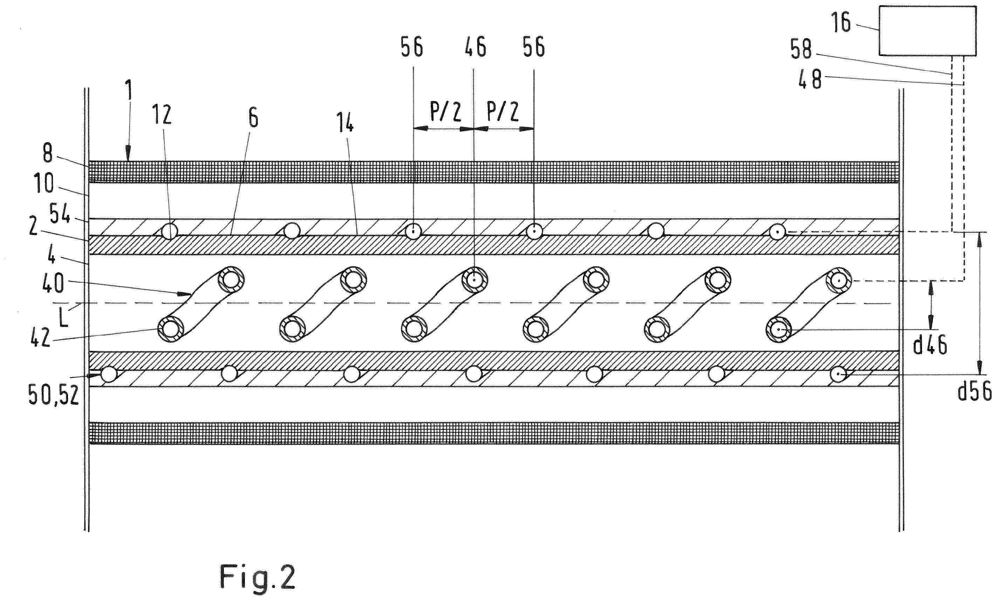

Nachfolgend soll mit Bezug auf Fig. 2 das zweite Ausführungsbeispiel der erfindungsgemäßen Fluidleitung 1 beschrieben werden, jedoch sollen lediglich die Unterschiede zum ersten Ausführungsbeispiel herausgestellt werden.

Die innere Heizeinrichtung 40 weist den Heizpfad 42 auf, welcher nun die Längsachse L wendelförmig entlang einer inneren Schraublinie 46 umwickelnd im Innenraum 4 angeordnet ist. Somit sind beide Heizdrähte 42, 52 wendelförmig angeordnet. Die Wendelrichtung des inneren Heizpfads 42 ist identisch mit der Wendelrichtung des äußeren Heizpfads 52 ist, wobei die Schraublinien 46, 56 beider Heizdrähte 42, 52 zueinander um eine halbe Steigung P/2 versetzt verlaufen. In Strömungsrichtung entlang der Längsachse L folg somit in der Zeichenebene der Fig. 2 betrachtet auf einer Seite der Längsachse L ein äußerer Heizpfadschnitt auf einen inneren Heizpfadschnitt und umgekehrt.

In Strömungsrichtung betrachtet, definiert die innere Schraublinie 46 des inneren Heizpfads 42 einen Durchmesser d46 und die äußere Schraublinie 56 des äußeren Heizpfads 52 einen Durchmesser d56. Beide Durchmesser d46, d56 kreuzen die Längsachse L. Der innere Durchmesser d46 entspricht einem Drittel des äußeren Durchmessers d56.

### Bezugszeichenliste

- 1: Fluidleitung
- 2: Rohr
- 4: Innenraum
- 6: Umfangsfläche
- 8: Außenrohr
- 10: Innenraum
- 12: Hitzeeinleitungsausnehmung
- 14: Wandung
- 16: Steuerung
- 40: innere Heizeinrichtung
- 42: innerer Heizpfad
- 46: innere Schraublinie
- 50: äußere Heizeinrichtung
- 52: äußerer Heizpfad
- 54: Thermoklebeband
- 56: äußere Schraublinie

- d46: Durchmesser der inneren Schraublinie
- d56: Durchmesser der äußeren Schraublinie
- L: Längsachse
- P: Steigung

## Patentansprüche

1. Beheizbare Fluidleitung (1) mit einem Rohr (2), das einen Innenraum (4) aufweist, wobei die Fluidleitung (1) eine Längsachse (L) definiert, umfassend eine in dem Innenraum (4) angeordnete innere Heizeinrichtung (40) und eine das Rohr (2) zumindest abschnittsweise umgebende äußere Heizeinrichtung (50), wobei die Heizeinrichtungen (40, 50) unabhängig voneinander steuerbar ausgebildet sind, **dadurch gekennzeichnet, dass** in der Umfangsfläche (6) des Rohres (2) mindestens eine Hitzeeinleitungsausnehmung (12) für die äußere Heizeinrichtung (50) ausgebildet ist.

2. Beheizbare Fluidleitung nach Anspruch 1, **dadurch gekennzeichnet, dass** das Rohr (2) ausgebildet ist, um einen bezogen auf die Längsachse (L) der Fluidleitung (1) radialen Wärmetransport in Richtung des Innenraums (4) zu ermöglichen.

3. Beheizbare Fluidleitung nach einem der vorangehenden Ansprüche, **dadurch gekennzeichnet, dass** die innere Heizeinrichtung (40) einen inneren Heizpfad (42), vorzugsweise ausschließlich einen einzigen inneren Heizpfad (42) aufweist, welcher sich entlang der Längsachse (L) erstreckt.

4. Beheizbare Fluidleitung nach einem der vorangehenden Ansprüche, **dadurch gekennzeichnet, dass** die äußere Heizeinrichtung (50) einen äußeren Heizpfad (52), vorzugsweise ausschließlich einen einzigen äußeren Heizpfad (52) aufweist, welcher sich entlang der Längsachse (L) erstreckt.

5. Beheizbare Fluidleitung nach Anspruch 3 oder 4, **dadurch gekennzeichnet, dass** der innere Heizpfad (42) die Längsachse (L) wendelförmig entlang einer inneren Schraublinie (46) umwickelnd und/oder der äußere Heizpfad (52) das Rohr (2) wendelförmig entlang einer äußeren Schraublinie (56) umwickelnd angeordnet ist/sind.

6. Beheizbare Fluidleitung nach Anspruch 5, **dadurch gekennzeichnet, dass** die Wendelrichtung des inneren Heizpfads (42) identisch mit der Wendelrichtung des äußeren Heizpfads (52) ist und die Schraublinien (46, 56) des inneren und des äußeren Heizpfads (42, 52) zueinander um eine halbe Steigung (P/2) versetzt verlaufen.

7. Beheizbare Fluidleitung nach Anspruch 3 oder 4, **dadurch gekennzeichnet, dass** der Durchmesser (d46) der inneren Schraublinie (46) einem Drittel des Durchmessers (d56) der äußeren Schraublinie (56) entspricht.

8. Beheizbare Fluidleitung nach Anspruch 4 bis 7, **dadurch gekennzeichnet, dass** der äußere Heizpfad (52) unmittelbar an einer Umfangsfläche (6) des Rohres (2) anliegt.

9. Beheizbare Fluidleitung nach einem der vorangehenden Ansprüche, **gekennzeichnet durch** ein thermisch isolierendes Außenrohr (8), welches einen Innenraum (10) aufweist, in welchem das Rohr (2) aufgenommen ist.

10. Beheizbare Fluidleitung nach einem der vorangehenden Ansprüche, **dadurch gekennzeichnet, dass** der mindestens eine äußere Heizpfad (52) zumindest abschnittsweise, vorzugsweise vollständig in der Wandung (14) des Rohres (2) angeordnet ist.

11. Beheizbare Fluidleitung nach einem der vorangehenden Ansprüche, **dadurch gekennzeichnet, dass** die äußere Heizeinrichtung (50) umfangsseitig mit einem thermisch isolierenden Isolationsmittel versehen ist, vorzugsweise einem Thermoklebeband (54).

## Claims

1. Heatable fluid line (1) having a tube (2) which has an interior (4), wherein the fluid line (1) defines a longitudinal axis (L), comprising an inner heating device (40) which is disposed in the interior (4), and an outer heating device (50) which surrounds the tube (2) at least in portions, wherein the heating devices (40, 50) are designed to be controllable independently of one another, **characterized in that** at least one heat introduction clearance (12) for the outer heating device (50) is formed in the circumferential face (6) of the tube (2).

2. Heatable fluid line according to Claim 1, **characterized in that** the tube (2) is designed to enable a heat transport in the direction of the interior (4), which is radial in terms of the longitudinal axis (L) of the fluid line (1).

3. Heatable fluid line according to either of the preceding claims, **characterized in that** the inner heating device (40) has an inner heating path (42), preferably exclusively a single inner heating path (42), which extends along the longitudinal axis (L).

4. Heatable fluid line according to one of the preceding claims, **characterized in that** the outer heating device (50) has an outer heating path (52), preferably exclusively a single outer heating path (52), which extends along the longitudinal axis (L).

5. Heatable fluid line according to Claim 3 or 4, **characterized in that** the inner heating path (42) is disposed so as to wrap the longitudinal axis (L) helically along an inner helix (46), and/or the outer heating path (52) is disposed so as to wrap the tube (2) helically along an outer helix (56).

6. Heatable fluid line according to Claim 5, **characterized in that** the helix direction of the inner heating path (42) is identical to the helix direction of the outer heating path (52), and the helices (46, 56) of the inner and of the outer heating path (42, 52) run so as to be mutually offset by half a pitch (P/2).

7. Heatable fluid line according to Claim 3 or 4, **characterized in that** the diameter (d46) of the inner helix (46) corresponds to one third of the diameter (d56) of the outer helix (56).

8. Heatable fluid line according to Claims 4 to 7, **characterized in that** the outer heating path (52) rests directly on a circumferential face (6) of the tube (2).

9. Heatable fluid line according to one of the preceding claims, **characterized by** a thermally insulating external tube (8) that has an interior (10) in which the tube (2) is received.

10. Heatable fluid line according to one of the preceding claims, **characterized in that** the at least one outer heating path (52) is disposed at least in portions, preferably completely, in the wall (14) of the tube (2).

11. Heatable fluid line according to one of the preceding claims, **characterized in that** the outer heating device (50) is circumferentially provided with a thermally insulating insulation means, preferably an adhesive thermal tape (54).

## Revendications

1. Conduite de fluide (1) apte à être chauffée, comprenant un tube (2), qui présente un espace intérieur (4), la conduite de fluide (1) définissant un axe longitudinal (L), comprenant un dispositif de chauffage interne (40) agencé dans l'espace intérieur (4) et un dispositif de chauffage externe (50) entourant le tube (2) au moins par endroits, les dispositifs de chauffage (40, 50) conçus pour être commandés indépendamment l'un de l'autre, **caractérisé en ce qu'**au moins un évidement (12) d'introduction de chaleur est aménagé pour le dispositif de chauffage externe (50) dans la surface périphérique (6) du tube (2).

2. Conduite de fluide apte à être chauffée, selon la revendication 1, **caractérisée en ce que** le tube (2) est conçu pour permettre un transport de chaleur radial par rapport à l'axe longitudinal (L) de la conduite de fluide (1), en direction de l'espace intérieur (4).

3. Conduite de fluide apte à être chauffée, selon l'une des revendications précédentes, **caractérisée en ce que** le dispositif de chauffage interne (40) présente un chemin de chauffage interne (42), de préférence exclusivement un seul chemin de chauffage interne (42), qui s'étend le long de l'axe longitudinal (L).

4. Conduite de fluide apte à être chauffée, selon l'une des revendications précédentes, **caractérisée en ce que** le dispositif de chauffage externe (50) présente un chemin de chauffage externe (52), de préférence exclusivement un seul chemin de chauffage externe (52), qui s'étend le long de l'axe longitudinal (L).

5. Conduite de fluide apte à être chauffée, selon la revendication 3 ou la revendication 4, **caractérisée en ce que** le chemin de chauffage interne (42) est agencé de façon à s'enrouler en hélice autour de l'axe longitudinal (L) le long d'une ligne d'hélice interne (46), et/ou le chemin de chauffage externe (52) est agencé de façon à s'enrouler en hélice autour du tube (2) le long d'une ligne d'hélice externe (56).

6. Conduite de fluide apte à être chauffée, selon la revendication 5, **caractérisée en ce que** le sens d'enroulement du chemin de chauffage interne (42) est identique au sens d'enroulement du chemin de chauffage externe (52) et **en ce que** les lignes d'hélice (46, 56) des chemins de chauffage interne et externe (42, 52) sont décalées l'une par rapport à l'autre d'un demi pas (P/2).

7. Conduite de fluide apte à être chauffée, selon la revendication 3 ou la revendication 4, **caractérisée en ce que** le diamètre (d46) de la ligne d'hélice interne (46) correspond à un tiers du diamètre (d56) de la ligne d'hélice externe (56).

8. Conduite de fluide apte à être chauffée, selon les revendications 4 à 7, **caractérisée en ce que** le chemin de chauffage externe (52) est en contact direct avec une surface périphérique (6) du tube (2).

9. Conduite de fluide apte à être chauffée, selon l'une des revendications précédentes, **caractérisée par** un tube extérieur (8) thermiquement isolant, qui présente un espace intérieur (10) dans lequel est logé le tube (2).

10. Conduite de fluide apte à être chauffée, selon l'une des revendications précédentes, **caractérisée en ce que** ledit au moins un chemin de chauffage externe (52) est agencé au moins partiellement, de préférence entièrement, dans la paroi (14) du tube (2).

11. Conduite de fluide apte à être chauffée, selon l'une des revendications précédentes, **caractérisée en ce que** le dispositif de chauffage externe (50) est pourvu sur sa périphérie d'un moyen d'isolation thermiquement isolant, de préférence un ruban adhésif thermique (54).
